(19) Europäisches Patentamt
European Patent Office
Office européen des brevets

(11) EP 2 004 979 B1

(12) **EUROPÄISCHE PATENTSCHRIFT**

(45) Veröffentlichungstag und Bekanntmachung des Hinweises auf die Patenterteilung:
07.03.2018 Patentblatt 2018/10

(21) Anmeldenummer: 07722170.3

(22) Anmeldetag: 04.04.2007

(51) Int Cl.:
*F02K 9/50* (2006.01)    *B64G 1/40* (2006.01)
*G01F 22/02* (2006.01)    *G01F 23/14* (2006.01)

(86) Internationale Anmeldenummer:
PCT/DE2007/000612

(87) Internationale Veröffentlichungsnummer:
WO 2007/118453 (25.10.2007 Gazette 2007/43)

(54) **VERFAHREN ZUR BESTIMMUNG DER TREIBSTOFFMASSE EINES RAUMFLUGKÖRPERS**

METHOD FOR DETERMINING THE FUEL MASS IN A SPACECRAFT

PROCÉDÉ POUR DÉTERMINER LA MASSE DE CARBURANT D'UN VÉHICULE SPATIAL

(84) Benannte Vertragsstaaten:
**DE FR GB**

(30) Priorität: **13.04.2006 DE 102006017811**

(43) Veröffentlichungstag der Anmeldung:
**24.12.2008 Patentblatt 2008/52**

(73) Patentinhaber: **ArianeGroup GmbH**
**82024 Taufkirchen (DE)**

(72) Erfinder:
• **PEUKERT, Markus**
**97941 Tauberbischofsheim (DE)**
• **SIMON, Dieter**
**74259 Widdern (DE)**

(74) Vertreter: **Schicker, Silvia et al**
**Wuesthoff & Wuesthoff**
**Patentanwälte PartG mbB**
**Schweigerstraße 2**
**81541 München (DE)**

(56) Entgegenhaltungen:
**DE-U1- 8 806 777    FR-A1- 2 629 913**
**US-A- 5 880 356**

• **CHOBOTOV M V ET AL: "LOW-GRAVITY PROPELLANT GAUGING SYSTEM FOR ACCURATE PREDICTIONS OF SPACECRAFT END-OF-LIFE" JOURNAL OF SPACECRAFT AND ROCKETS, AMERICAN INSTITUTE OF AERONAUTICS AND ASTRONAUTICS,REASTON,VA, US, Bd. 30, Nr. 1, Januar 1993 (1993-01), Seiten 92-101, XP000390641 ISSN: 0022-4650**

**Beschreibung**

Die Erfindung betrifft ein Verfahren zur Bestimmung der Treibstoffmasse in den Tanks eines sich unter Schwerelosigkeit befindlichen Raumflugkörpers (z.B. eines Satelliten) während seiner Mission, Als Treibstoffe kommen alle lagerfähigen Treibstoffe in Betracht, die bei den nominellen Operationsbedingungen im Tank in flüssiger Form vorliegen, z.B. Hydrazin, Monomethylhydrazin, Disfiickstofftetroxid, Xenon.

Ein effektives Management eines Raumflugkörpers, z.B. eines Satelliten, welches aufgrund der hohen wirtschaftlichen Kosten notwendig ist, erfordert die genaue Vorhersage der verbleibenden Lebenszeit des Raumflugkörpers, z.B. um mit dem verbleibenden Treibstoff bei Ende der Lebensdauer die Position im Orbit für nachfolgende Satelliten freizumachen. Ein Parameter zur Bestimmung der verbleibenden Lebenszeit ist die Menge an Treibstoff, welche in den Treibstofftanks des Raumflugkörpers vorhanden ist. Es ist folglich wichtig, diese Menge an Treibstoff genau vorhersagen zu können.

Im Stand der Technik sind verschiedene Verfahren für die Bestimmung der Treibstoffmenge bekannt. Die Methode des Bookkeeping (Buchführung) berechnet den Treibstoffverbrauch basierend auf der Anzahl und der Dauer aller Triebwerkszündungen seit dem Start. Da der Verbrauch der Triebwerke ungefähr bekannt ist, kann abgeschätzt werden, wie viel Treibstoff noch in den Treibstofftanks vorhanden ist. Ferner ist die Methode PVT (Pressure-Volume-Temperature) bekannt. Diese verwendet das ideale Gasgesetz, in welchem die Gastemperatur und der Gasdruck im Tank verwendet werden, um zu berechnen wie viel Gas noch vorhanden ist. Daraus lässt sich die verbleibende Treibstoffmenge berechnen.

Ein wesentlicher Nachteil dieser Verfahren ist es, dass die Genauigkeit, welche mit diesen Verfahren erzielt werden kann, den heutigen Genauigkeitsanforderungen nicht mehr entspricht.

Die US2004231413 beschreibt ebenfalls ein Verfahren zur Messung der Treibstoffmasse. Das dort beschriebene Verfahren hat den Nachteil, dass zur Durchführung der Messung und Bestimmung der Treibstoffmasse zusätzliche Hardware im Raumflugkörper benötigt wird. Das hat insbesondere den Nachteil, dass sich das Gewicht des Raumflugkörpers erhöht. Ferner entstehen durch die zusätzlich benötigte Hardware wirtschaftliche Nachteile, da sich die Kosten des Raumflugkörpers erhöhen.

Die Druckschrift US 5 880 356 A offenbart eine Vorrichtung und ein Verfahren zur Messung der Treibstoffmenge eines Raumflugkörpers. Dabei sind in der Vorrichtung Drucksensoren für Hochdrucktanks und Drucksensoren für Treibstofftanks vorgesehen. Die Messung der Treibstoffmenge in den Treibstofftanks erfolgt basierend auf Informationen über Druckvariationen, welche von den Sensoren bei der Zufuhr von Bedrückungsgas aus den Hochdrucktanks zu den Treibstofftanks erfasst werden.

Es ist eine Aufgabe der vorliegenden Erfindung ein Verfahren zur Bestimmung der Treibstoffmenge, welche in den Tanks eines Raumflugkörpers zur Verfügung steht, anzugeben, welches die Treibstoffmenge mit höherer Genauigkeit bestimmen kann, als dies mit den bekannten Verfahren möglich ist.

Die Aufgabe wird gelöst durch ein Verfahren nach Anspruch 1. Weitere vorteilhafte Ausgestaltungen der Erfindung sind in den Unteransprüchen genannt.

Erfindungsgemäß ist ein Verfahren zur Messung der Treibstoffmenge eines sich unter Schwerelosigkeit befindlichen Raumflugkörpers vorgesehen, welche die folgenden Schritte umfasst: Öffnung mindestens eines Absperrventils zur Auswahl einer zu verwendenden Blende und Freigabe eines Stroms eines Bedrückungsgases aus mindestens einem Hochdrucktank mit mindestens einem Steuerventil zu mindestens einem Treibstofftank, bei dem die Treibstoffmasse in dem mindestens einen Treibstofftank mit Hilfe eines gemessenen ersten Drucks in dem mindestens einen Treibstofftank vor einem Auffüllvorgang mit Bedrückungsgas, einer gemessenen ersten Temperatur in dem mindestens einen Treibstofftank vor dem Auffüllvorgang, eines ersten Dampfdrucks des Treibstoffs vor dem Auffüllvorgang, einer gemessenen Zeitspanne des Auffüllvorgangs, eines gemessenen zweiten Drucks in dem mindestens einen Treibstofftank nach dem Auffüllvorgang, einer gemessenen zweiten Temperatur in dem mindestens einen Treibstofftank nach dem Auffüllvorgang, eines zweiten Dampfdrucks des Treibstoffs nach dem Auffüllvorgang, eines gemessenen dritten, über den Auffüllvorgang gemittelten Drucks im Hochdrucktank, einer gemessenen dritten, über den Auffüllvorgang gemittelten Temperatur im Hochdrucktank, eines vom Innendruck abhängigen Treibstofftankvolumens, einer temperaturabhängigen Treibstoffdichte, eines Blendenkoeffizienten und eines Parameters, welcher die Abhängigkeit der kritischen Strömung vom Vordruck berücksichtigt, bestimmt wird.

Darüber hinaus ist erfindungsgemäß weiterhin vorgesehen ein Verfahren, welches ferner den Schritt umfasst Öffnung mindestens eines Rückschlag/Absperrventils zur Auswahl des mindestens einen zu bedrückenden Treibstofftanks.

Darüber hinaus ist erfindungsgemäß weiterhin vorgesehen ein Verfahren, welches ferner den Schritt umfasst Schließung des mindestens einen Steuerventils, wenn ein gewünschter Druck in dem mindestens einen Treibstofftank erreicht ist.

Darüber hinaus ist erfindungsgemäß weiterhin vorgesehen ein Verfahren, welches die Treibstoffmasse mit Hilfe der Formeln

$$mProp := \frac{\dfrac{p1 - pV1}{T1} \cdot VT(p1) - \dfrac{(p2 - pV2)}{T2} \cdot VT(p2) + delta\_mHe \cdot R}{\dfrac{p1 - pV1}{T1 \cdot rho(T1)} - \dfrac{p2 - pV2}{T2 \cdot rho(T2)}}$$

mit

$$delta\_mHe := dt \cdot K \cdot pHe^c \cdot \left[ \frac{1}{R \cdot The \left[ \left( \dfrac{a}{The} - b \right) + \dfrac{1}{pHe} \right]} \right]^{\frac{1}{2}}$$

und

$$VT(p) := V0 + aV \cdot p$$

und

$$rho(T) := rho20 \cdot [\, 1 + aProp \cdot (T - 293)\,]$$

bestimmt.

Eine Definition der Variablen in der obigen Formel findet sich in Tabelle 1 am Ende der detaillierten Beschreibung.

Die erfindungsgemäßen Verfahren haben den Vorteil, dass sie es ermöglichen mit höherer Genauigkeit die im Raumflugkörper zur Verfügung stehende Treibstoffmenge zu messen und zu bestimmen als dies mit den bekannten Verfahren möglich ist.

Ein weiterer Vorteil der erfindungsgemäßen Verfahren ist, dass dadurch die Messung und Bestimmung der Treibstoffmenge mehrmals während der Missionsdauer des Raumflugkörper durchgeführt werden kann und zwar so, dass durch diesen Vorgang keine Einschränkungen des Betriebs des Raumflugkörpers verursacht werden.

Darüber hinaus haben die erfindungsgemäßen Verfahren den Vorteil, dass nur Komponenten des Raumflugkörpers verwendet werden, die ohnehin für den Betrieb des Raumflugkörpers vorhanden sind. Daraus resultiert ferner der Vorteil, dass es durch die erfindungsgemäßen Verfahren weder zu einer Erhöhung des Gewichts des Raumflugkörpers kommt, noch dessen Kosten erhöht werden.

Es werden nun Ausführungsformen der Erfindung unter zu Hilfenahme der folgenden Zeichnungen beschrieben. Die Figuren zeigen:

Fig. 1    Blockdiagramm eines Antriebssystems
Fig. 2    Tankdruck während der Mission
Fig. 3    Absolute und 3-Sigma-Genauigkeit
Fig. 4    Einfluss der Fehler auf den Gesamtfehler
Fig. 5    Blockdiagramm der erfindungsgemäßen Vorrichtung

Nicht jeder Satellit ist mit einem Apogäumsmotor ausgerüstet, da der Einschuss durch die Trägerrakete direkt in den GEO (Geosynchronous Earth Orbit) erfolgt. Ein Apogäumsmotor ist ein Raketenantrieb eines Raumflugkörpers, z.B. eines Satelliten, zum Erreichen der endgültigen Umlaufbahn.

Durch den direkten Einschuss der Trägerrakete in den GEO erübrigt sich ebenfalls die Verwendung eines Druckreglers für das Bedrücken der Treibstofftanks (TOx, TFu). Der Druckregler ist durch eine Blende (FL1, FL2) ersetzt, welche ein langsames Auffüllen und damit Bedrücken der Treibstofftanks (TOx, TFu) z.B. mit Helium als Druckgas ermöglicht. Auf diese Weise können die Treibstofftanks (TOx, TFu) mit mehreren "Mini-Blow-Down"-Manövern gefahren werden.

Bei einem Mini-Blow-Down-Manöver sinkt der Tankdruck von anfänglich ca. 18 bar durch Ausfördern der Treibstoffe auf ca. 14 bar ab. Über die erfindungsgemäße Vorrichtung wird in einem Hochdrucktank (THe) gelagertes Druckgas in die Treibstofftanks (TOx, TFu) nachgefüllt bis der Druck von ca. 18 bar wieder erreicht ist. Dieser Auffüllvorgang durch die Blende (FL1, FL2) kann nun zum Messen der in den Treibstofftanks (TOx, TFu) befindlichen Treibstoffmenge genutzt werden.

Die FMO-Methode (Flow Measurement via Orifice) misst die Zeit, welche zum Bedrücken von Gasvolumen in Treibstofftanks (TOx, TFu) benötigt wird. Das Druckgas z.B. Helium fließt dabei aus einem Hochdrucktank (THe) über eine Blende (FL1, FL2) mit sehr geringer Öffnung. Dadurch wird die Bedrückungszeit verlängert, was die Steuerung des Treibstoffstroms über Steuerventile, (Flow-Control-Valves) (FCV1, FCV2) ermöglicht.

Wenn die Blende (FL1, FL2) gründlich charakterisiert wurde, lässt sich aus den Bedingungen im Hochdrucktank (THe) der Helium-Massenstrom errechnen. Aus der gemessenen Zeit kann somit die überströmende Heliummasse bestimmt werden. Durch Messung der Bedingungen zu Beginn und am Ende des Überströmvorganges im Treibstofftank kann die Treibstoffmasse errechnet werden.

Zur Messung werden verwendet: Eine Blende (FL1, FL2), deren Durchflusscharakteristik bekannt sein muss, Druckmessgeber in Helium- und Treibstofftank und Temperaturmessgeber auf Helium- und Treibstofftank und Zeitmessung des Auffüllvorgangs.

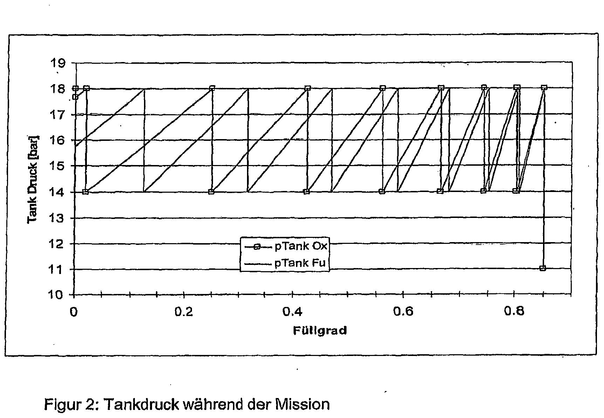

Die Treibstoffmasse kann bei jedem Auffüllvorgang gemessen werden. Bei dem gewählten Druckunterschied von ca. 4 bar ergeben sich bei einem zu Beginn mit 85%-Füllgrad gefüllten Tank 7 Auffüllvorgänge, wie in Figur 2 veranschaulicht. Der gewählten Druckunterschied ergibt sich als Kompromiss zwischen der Anzahl und der Tiefe der Mini-Blow-Downs. Je größer der Druckunterschied ist, desto größer ist auch die Messgenauigkeit, jedoch verringert sich damit die Anzahl der Messmöglichkeiten. Das erfindungsgemäße Verfahren ist also nicht auf den oben genannten Druckunterschied von ca. 4 bar beschränkt, sondern lässt sich für jeglichen Druckunterschied verwenden. Der Tankdruck während einer Mission in Abhängigkeit vom Füllgrad ist in Fig. 2 gezeigt.

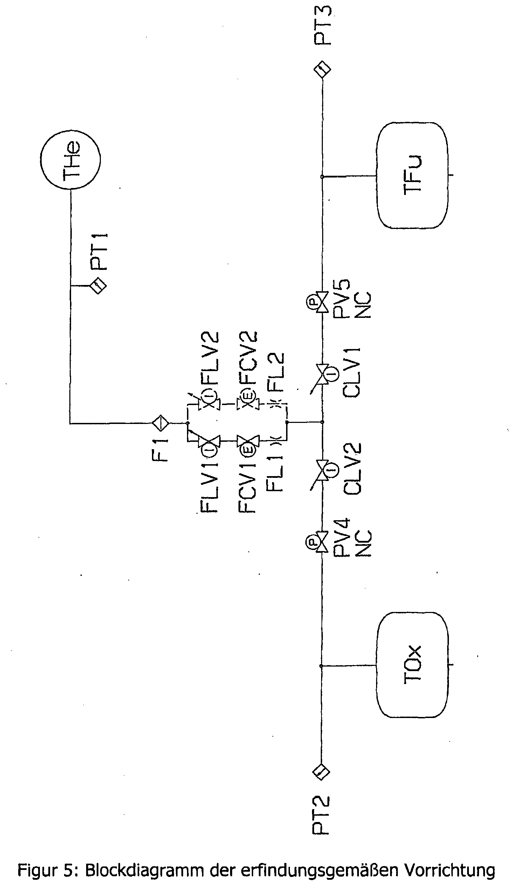

Als nächstes wird die Vorrichtung zur Messung der Treibstoffmenge anhand von Fig. 5 beschrieben. Sie umfasst eine Anordnung von Ventilen, nämlich Absperrventilen (Flow-Latch-Valves) (FLV1, FLV2), Steuerventilen (Flow-Control-Valves) (FCV1, FCV2), Rückschlag/Absperrventilen (Check-Latch-Valves) (CLV1, CLV2) und Blenden (FL1, FL2) im Treibstofftank-Bedrückungssystem für das Antriebssystem eines Satelliten.

Die Anordnung umfasst einen Hochdrucktank (THe), einen ersten und zweiten Treibstofftanks (TOx, TFu), mindestens ein Absperrventil (FLV1, FLV2), und mindestens ein Steuerventil (FCV1, FLV2). Darüber hinaus umfasst die erfindungsgemäße Anordnung für den ersten und zweiten Treibstofftank (TOx, TFu) jeweils ein erstes bzw. ein zweites Rückschlag/Absperrventil (CLV1, CLV2).

Der erste und zweite Treibstofftank (TOx, TFu) sind dabei mit dem Hochdrucktank (THe) so verbunden, dass die Treibstofftanks (TOx, TFu) durch ein Druckgas aus dem Hochdrucktank (THe) bedrückt werden können. Die aufeinander folgende Bedrückung des ersten und zweiten Treibstofftanks (TOx, TFu) mit dem Druckgas aus dem Hochdrucktank (THe) erfolgt zum Beispiel nach Vollendung eines Mini-Blow-Downs.

In der Verbindung zwischen dem Hochdrucktank (THe) und dem ersten und zweiten Treibstofftank (TOx, TFu) befinden sich aufeinander folgend verbunden ein Absperrventil (FLV1) und ein Steuerventil (FCV1). Das erste bzw. zweite Rückschlag/Absperrventil (CLV1, CLV2) befindet sich vor dem jeweiligen Treibstofftank (TOx, TFu).

Dabei ist das Absperrventil (FLV1) so angebracht, dass es zur Wahl der zu verwendenden Blende (FL1) verwendet werden kann. Ferner sind die Rückschlag/Absperrventile (CLV1, CLV2) so angebracht, dass durch deren Öffnung der zu bedrückende Treibstofftank (TOx, TFu) ausgewählt werden kann.

Darüber hinaus ist das Steuerventil (FCV1) so angebracht, dass der Strom des Bedrückungsgases für die Treibstofftanks (TOx, TFu) freigegeben werden kann. Ferner kann, z. B. per Telekommando, das Steuerventil (FCV1) wieder geschlossen werden, wenn der gewünschte Druck im ausgewählten Treibstofftank (TOx, TFu) erreicht ist. Nach Schließung des Steuerventils (FCV1) ist die Bedrückungszeit bekannt.

Durch eine Druck und Temperaturmessung in dem beteiligten Hochdrucktank (THe) und dem gewählten Treibstofftank (TOx oder TFu) vor und nach diesem Manöver sowie der Ermittlung der Blendendurchflussrate durch Tests am Boden lässt sich die im zur Bedrückung gewählten Treibstofftank errechnen. Dazu können die unten beispielhaft dargestellten Gleichungen verwendet werden.

Die Vorrichtung wurde der Einfachheit halber mit nur einem Absperrventil (FLV1/FLV2), einem Steuerventil (FCV1/FLV2) und einem Rückschlag/Absperrventil (CLV1, CLV2) pro Treibstofftank (TOx, TFu) beschrieben. Sie ist darauf aber nicht beschränkt. Die Komponenten der Vorrichtung können, wie auch in Fig. 5 offenbart, redundant oder nicht redundant angeordnet und ausgelegt sein. Fig. 5 zeigt ein Blockdiagramm mit den mindestens benötigten Komponenten für die Vorrichtung. Der gestrichelte Zweig zeigt die redundanten Komponenten.

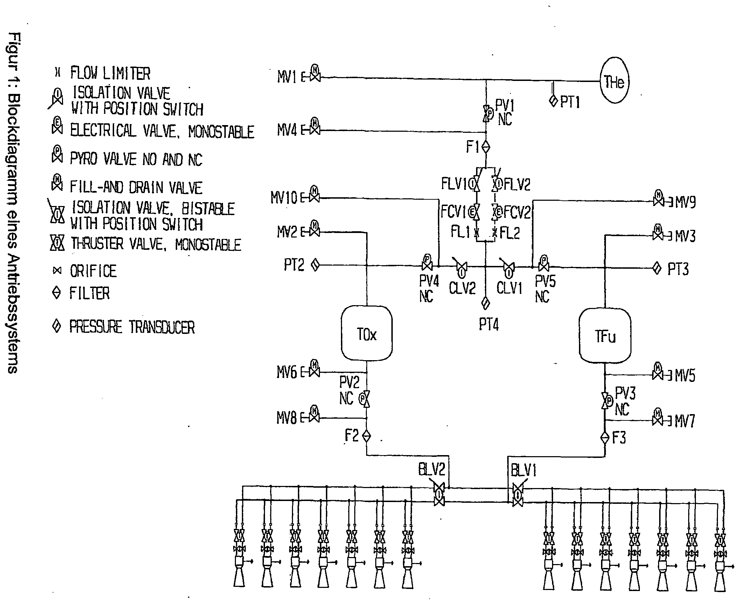

Die Vorrichtung dient dazu betriebsunabhängig, d.h. ohne Unterbrechung des nominellen Betriebs, einen wohldefinierten Fluss von Bedrückungsgas zu jedem Zeitpunkt individuell in den vordefinierten Treibstoffbehältern (TOx, TFu) strömen zu lassen. Figur 5 zeigt die Vorrichtung am Beispiel eines Zweistoffantriebssystems, wie in Figur 1 dargestellt.

Als nächstes wird ein erfindungsgemäßes Verfahren beschrieben. Die Treibstofftanks (TOx, TFu) werden nach Vollendung eines Mini-Blow-Downs nacheinander durch das Druckgas aus dem Hochdrucktank (THe) bedrückt. Dazu wird zunächst eines der Absperrventile (FLV1, FLV2) zur Wahl der zu verwendenden Blende (FL1, FL2) und eines der beiden Rückschlag/Absperrventile (CLV1, CLV2) zur Wahl des zu bedrückenden Treibstofftanks geöffnet. Nun kann mit den Steuerventilen (FCV1, FCV2) der Strom des Bedrückungsgases freigegeben werden. Das Steuerventil (FCV1, FCV2) wird, zum Beispiel per Telekommando, wieder geschlossen, wenn der gewünschte Druck im Treibstofftank (TOx, TFu) erreicht ist. Die Bedrückungszeit ist danach bekannt. Durch eine Druck und Temperaturmessung in dem beteiligten Hochdrucktank (THe) und dem gewählten Treibstofftank (TOx, TFu) vor und nach diesem Manöver sowie der Ermittlung der Blendendurchflussrate durch Tests am Boden lässt sich die Treibstoffmenge im zur Bedrückung gewählten Treibstofftank (TOx, TFu) errechnen. Dazu können die unten beispielhaft dargestellten Gleichungen verwendet werden.

Mit anderen Worten wird für das erfindungsgemäße Verfahren zu einem beliebigen Zeitpunkt ein Treibstofftankdruck (p1), ein Treibstofftanktemperatur (T1) und ein Dampfdruck eines Treibstoffs (pV1) gemessen. Anschließend findet ein Auffüllvorgang statt. Während des Auffüllvorgangs wird Druckgas (z.B. Helium) aus einem Hochdrucktank (THe) in einen oder mehrere Treibstofftanks (TOx, TFu) gedrückt. Dabei fließt das Druckgas aus dem Hochdrucktank (THe) über eine Blende (FL1, FL2) mit sehr geringer Öffnung in einen oder mehrere Treibstofftanks (TOx, TFu). Durch die Verwendung einer Blende (FL1, FL2) mit sehr geringer Öffnung wird die Bedrückungszeit verlängert, was die Steuerung des Druckgasflusses über Steuerventile (FCV1, FCV2) ermöglicht. Nach Beendigung des Auffüllvorgangs, z.B. nach einer Zeitspanne (dt), wird ein Treibstofftankdruck (p2), eine Treibstofftanktemperatur (T2) und ein Dampfdruck des Treibstoffs (pV2) gemessen. Danach wird die Treibstoffmasse (mProp) in dem einem oder mehreren Treibstofftanks (TOx, TFu) berechnet.

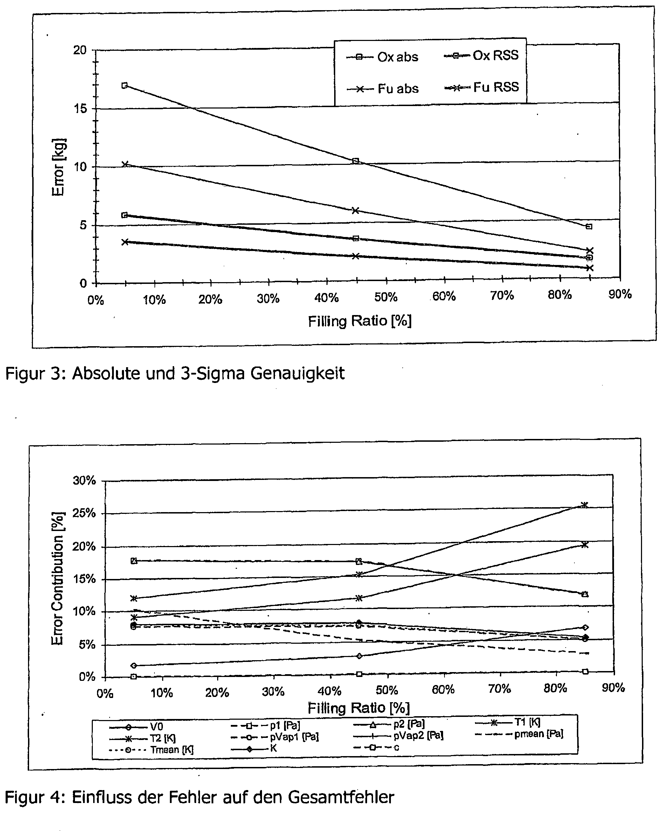

Ein Vorteil dieses Verfahrens ist, dass es mit ohnehin für den Betrieb benötigten Ventilen und Sensoren auskommt. Die Genauigkeit des Verfahrens hängt von der Genauigkeit der Ermittlung der Blendendurchflussrate ab, die aber mit geringem Aufwand und mit hoher Genauigkeit durchgeführt werden kann. Somit wird der Beitrag des Blendendurchflussfehlers relativ gering im Vergleich zu den anderen Fehlern wie Abbildung 4 (Parameter K und c) zeigt.

Die Treibstoffmasse (mProp) berechnet sich aus:

$$mProp := \frac{\dfrac{p1 - pV1}{T1} \cdot VT(p1) - \dfrac{(p2 - pV2)}{T2} \cdot VT(p2) + delta\_mHe \cdot R}{\dfrac{p1 - pV1}{T1 \cdot rho(T1)} - \dfrac{p2 - pV2}{T2 \cdot rho(T2)}}$$

mit

$$delta\_mHe := dt \cdot K \cdot pHe^c \cdot \left[ \frac{1}{R \cdot The \left[ \left( \dfrac{a}{The} - b \right) + \dfrac{1}{pHe} \right]} \right]^{\frac{1}{2}}$$

und dem vom Innendruck abhängigen Treibstofftankvolumen VT(p) := V0 + aV·p und der temperaturabhängigen Dichte des Treibstoffes rho(T) := rho20·[1 + aProp·(T - 293)].

Dabei verwendet die obige Formel zur Bestimmung der Treibstoffmasse (mProp) in den Treibstofftanks (TOx, TFu) den Treibstofftankdruck vor dem Auffüllen (p1), die Treibstofftanktemperatur vor dem Auffüllen (T1), den Dampfdruck des Treibstoffes vor dem Auffüllen (pV1), den Treibstofftankdruck nach dem Auffüllen (p2), die Treibstofftanktemperatur nach dem Auffüllen (T2), den Dampfdruck des Treibstoffes nach dem Auffüllen (pV2), die Auffüllzeitspanne (dt), den Parameter (K), welcher den Blendenkoeffizienten, die Blendenfunktion und die Querschnittsfläche zusammenfasst und die Blende (FL1, FL2) charakterisiert. Ferner wird der ein Parameter (C) verwendet, welche die Abhängigkeit der kritischen Strömung von Vordruck berücksichtigt. Ferner werden der über den Auffüllvorgang gemittelte Druck (pHe) und die ebenfalls gemittelte Temperatur (The) im Hochdrucktank in der Formel verwendet. Die in den Formeln verwendeten Parameter sind weiter in Tabelle 1 erläutert.

Durch die Messung der Bedrückzeit (dt), sowie der Messung der Temperaturen (T1, T2) und Drücke im Treibstofftank (p1, p2) lässt sich die Treibstoffmasse (mProp) im Tank bestimmen.

Die eingesetzte Blende (FL1, FL2) ist durch Flowtests empirisch charakterisiert worden. In diesen Tests wurde der Massenstrom bei verschiedenen Temperaturen und Vordrücken gemessen. Hiermit wurden die Blendenkoeffizienten K und c ermittelt.

In der Gleichung für mProp wurde beispielhaft Helium als Bedrückungsgas angenommen. Die Erfindung ist aber nicht auf Helium beschränkt. Als Bedrückungsgas könnten ebenso Stickstoff, aber auch jedes geeignete weitere Gas verwendet werden.

Als Zustandsgleichung für Helium ist in der Gleichung für mProp die Realgasgleichung in der Form

$$pV = RTZ$$

$$Z = \left(\frac{a}{T} - b\right)p + 1$$

mit                    Realgasfaktor, p Druck [Pa], V Volumen [m³], m Masse [kg],

R=2078 Nm/kgK Helium-Gas-Konstante, T Temperatur [K], a=1,48·10⁻⁶ [K/Pa] empirischer Koeffizient und b=4·10⁻¹⁰ [1/Pa] empirischer Koeffizient, beide abgeleitet durch das JPL (Jet Propulsion Labratory, USA), verwendet worden.

Auch andere Formulierungen der Gleichung für mProp würden mit dem Verfahren zum Erfolg führen, z.B. die ideale Gasgleichung mit Z=1.

Die vorliegende Form der Gleichung stellt einen Kompromiss zwischen erzielbarer Genauigkeit und Aufwand der Formulierung dar.

Ebenso ist hier lediglich beispielhaft die Treibstoffdichte rho linear mit der folgenden Gleichung modelliert:

$$rho(T) := rho20 \cdot [\, 1 + aProp \cdot (T - 293)\,]$$

Ferner wurde auch die Treibstofftank-Volumenvergrößerung unter Innendruck VT lediglich beispielhaft linear modelliert:

$$VT(p) := V0 + aV \cdot p$$

Um die Genauigkeit des Verfahrens zu bestimmen wurde das totale Differential der Funktion mProp nach den Variablen V0, p1, p2, T1, T2, pV1, pV2, pHe, The, dt, K und c gebildet. Dadurch konnte gezeigt werden, dass es mit dem erfindungsgemäßen Verfahren möglich ist, die Treibstoffmenge zu Ende des Satellitenlebens mit einer Genauigkeit (3-sigma) von 6,5 kg bei Oxidiator (NTO) und 4 kg bei Brennstoff (MMH) zu messen. Die absolute und die 3-Sigma-Genauigkeit des Verfahrens ist in Figur 3 beispielhaft gezeigt; der Einfluss der Fehler auf den Gesamtfehler in Figur 4.

Ein Vorteil dieses Verfahrens ist, dass das Verfahren mit für den Betrieb des Satelliten ohnehin vorhandener Hardware auskommt. Es werden keine zusätzlichen Komponenten benötigt, somit entstehen keine Zusatzkosten für Beschaffung derselben, bzw. Massennachteile aufgrund des Gewichtes dieser Komponenten. Einschränkungen im Betrieb des Satelliten fallen ebenfalls nicht an.

Tabelle 1:

| Messwerte | | |
|---|---|---|
| p1 | Treibstofftankdruck vor dem Auffüllen | |
| p2 | Treibstofftankdruck nach dem Auffüllen | |
| T1 | Treibstofftanktemperatur vor dem Auffüllen | |
| T2 | Treibstofftanktemperatur nach dem Auffüllen | |
| dt | Zeitspanne des Auffüllvorgangs | |
| PHe | Mittlerer Heliumtankdruck | Gemittelt über den Auffüllvorgang |
| The | Mittlere Helium Temperatur | Gemittelt über den Auffüllvorgang |
| Treibstofftank | | |
| VT(p) | Vom Innendruck abhängiges Treibstofftankvolumen | |
| V0 | Tankvolumen (bei Umgebungsdruck) | Hiermit wird das Tankvolumen als Funktion des Innendruckes modelliert) |
| aV | Approximationskoeffizient zur linearen Modellierung des Tankvolumens | Hiermit wird das Tankvolumen als Funktion des Innendruckes modelliert |

(fortgesetzt)

| Treibstoff | | |
|---|---|---|
| pV1 | Dampfdruck vor dem Auffüllen | Temperaturabhängig, wird über eine nicht angegebene Gleichung ermittelt. |
| pV2 | Dampfdruck nach dem Auffüllen | Temperaturabhängig, wird über eine nicht angegebene Gleichung ermittelt. |
| rho(T) | Von der Temperatur abhängige Dichte des Treibstoffs | |
| rho20 | Dichte bei 20°C | Hiermit wird die Treibstoffdichte als Funktion von T modelliert |
| aProp | Approximationskoeffizient zur linearen Modellierung der Dichte | Hiermit wird die Treibstoffdichte als Funktion von T modelliert |
| Blende | | |
| K | Parameter, der Blendenkoeffizient, Blendenfunktion und Querschnittsfläche zusammenfasst | durch Messung ermittelt |
| C | Parameter, der die Abhängigkeit der kritischen Strömung vom Vordruck berücksichtigt | durch Messung ermittelt |
| Physikalische Konstanten des Bedrückungsgases | | |
| R | Gaskonstante | z.B. bei Helium R=2078 N*m/(kg*K) |
| A, b | Empirisch bestimmte Realgaskoeffizienten | z.B. bei der verwandten Formulierung a = 1.48E-6 K/pa, b = 4E-10 1/pa |

**Patentansprüche**

1. Verfahren zur Messung der Treibstoffmenge eines sich unter Schwerelosigkeit befindlichen Raumflugkörpers umfassend die Schritte Öffnung mindestens eines Absperrventils (FLV1, FLV2) zur Auswahl einer zu verwendenden Blende (FL1, FL2) und Freigabe eines Stroms eines Bedrückungsgases von mindestens einem Hochdrucktank (THe) mit mindestens einem Steuerventil (FCV1, FCV2) zu mindestens einem Treibstofftank (TOx, TFu), **dadurch gekennzeichnet, dass** die Treibstoffmasse (mProp) in dem mindestens einen Treibstofftank (TOx, TFu) mit Hilfe eines gemessenen ersten Drucks (p1) in dem mindestens einen Treibstofftank (TOx, TFu) vor einem Auffüllvorgang mit Bedrückungsgas, einer gemessenen ersten Temperatur (T1) in dem mindestens einen Treibstofftank (TOx, TFu) vor dem Auffüllvorgang, eines ersten Dampfdrucks (pV1) des Treibstoffs vor dem Auffüllvorgang, einer gemessenen Zeitspanne (dt) des Auffüllvorgangs, eines gemessenen zweiten Drucks (p2) in dem mindestens einen Treibstofftank (TOx, TFu) nach dem Auffüllvorgang, einer gemessenen zweiten Temperatur (T2) in dem mindestens einen Treibstofftank (TOx, TFu) nach dem Auffüllvorgang, eines zweiten Dampfdrucks (pV2) des Treibstoffs nach dem Auffüllvorgang, eines gemessenen dritten, über den Auffüllvorgang gemittelten Drucks (pHe) im Hochdrucktank (THe), einer gemessenen dritten, über den Auffüllvorgang gemittelten Temperatur (The) im Hochdrucktank (THe), eines vom Innendruck abhängigen Treibstofftankvolumens (VT(p)), einer temperaturabhängigen Treibstoffdichte (rho(T)), eines Blendenkoeffizienten (K) und eines Parameters (C), welcher die Abhängigkeit der kritischen Strömung vom Vordruck berücksichtigt, bestimmt wird.

2. Verfahren nach Anspruch 1 **dadurch gekennzeichnet, dass** das Verfahren ferner den Schritt umfasst Öffnung mindestens eines Rückschlag/Absperrventils (CLV1, CLV2) zur Auswahl mindestens eines zu bedrückenden Treibstofftanks (TOx, TFu).

3. Verfahren nach einem der Ansprüche 1 oder 2, **dadurch gekennzeichnet, dass** das Verfahren ferner den Schritt umfasst Schließung des mindestens einen Steuerventils (FCV1, FCV2), wenn ein gewünschter Druck (p1, p2) in mindestens einem Treibstofftank (Tox, Tfu) erreicht ist.

4. Verfahren nach einem der vorhergehenden Ansprüche **dadurch gekennzeichnet, dass** die Treibstoffmasse (mProp) mit Hilfe der Formeln

$$mProp := \frac{\frac{p1 - pV1}{T1} \cdot VT(p1) - \frac{(p2 - pV2)}{T2} \cdot VT(p2) + delta\_mHe \cdot R}{\frac{p1 - pV1}{T1 \cdot rho(T1)} - \frac{p2 - pV2}{T2 \cdot rho(T2)}} \cdot$$

mit

$$delta\_mHe := dt \cdot K \cdot pHe^{c} \cdot \left[ \frac{1}{R \cdot The \left[ \left( \frac{a}{The} - b \right) + \frac{1}{pHe} \right]} \right]^{\frac{1}{2}}$$

und

$$VT(p) := V0 + aV \cdot p$$

und

$$rho(T) := rho20 \cdot [\, 1 + aProp \cdot (T - 293)\,]$$

bestimmt wird,

wobei mProp die Treibstoffmasse ist;

wobei p1 der gemessene erste Druck in dem mindestens einen Treibstofftank (TOx, TFu) vor dem Auffüllvorgang mit Bedrückungsgas ist;

wobei pV1 der erste Dampfdruck des Treibstoffs vor dem Auffüllvorgang ist;

wobei p2 der gemessene zweite Druck in dem mindestens einen Treibstofftank (TOx, TFu) nach dem Auffüllvorgang ist;

wobei pV2 der zweite Dampfdruck des Treibstoffs nach dem Auffüllvorgang ist;

wobei T1 die gemessene erste Temperatur in dem mindestens einen Treibstofftank (TOx, TFu) vor dem Auffüllvorgang ist;

wobei T2 die gemessene zweite Temperatur in dem mindestens einen Treibstofftank (TOx, TFu) nach dem Auffüllvorgang ist;

wobei VT(p) das vom Innendruck abhängige Treibstofftankvolumen ist und dabei p der Innendruck ist, V0 das Tankvolumen bei Umgebungsdruck ist und aV ein Approximationskoeffizient zur linearen Modellierung des Tankvolumens ist;

wobei dt die gemessene Zeitspanne des Auffüllvorgangs ist;

wobei K der Biendenkoeffizient ist;

wobei C der Parameter ist, welcher die Abhängigkeit der kritischen Strömung vom Vordruck berücksichtigt;

wobei T eine Temperatur ist;

wobei R die Gaskonstante ist;

wobei pHe der gemessene dritte, über den Auffüllvorgang gemittelte Druck im Hochdrucktank (THe) ist;

wobei The die gemessene dritte, über den Auffüllvorgang gemittelte Temperatur im Hochdrucktank (THe) ist;

wobei a, b empirisch bestimmte Realgaskoeffizienten sind;

wobei aProp ein Approximationskoeffizient zur linearen Modellierung der Dichte ist;

wobei rho20 die Treibstoffdichte bei 20°C ist;

wobe rho(T) die temperaturabhängige Treibstoffdichte ist.

## Claims

1. A method of measuring the amount of fuel aboard a spacecraft under weightless conditions, comprising the steps of opening at least one latch valve (FLV1, FLV2) for selecting an orifice (FL1, FL2) to be used and releasing a stream of a pressurizing gas from at least one high-pressure tank (THe) having at least one control valve (FCV1, FCV2) to at least one fuel tank (TOx, TFu), **characterized in that** the amount of fuel (mProp) in the at least one fuel tank (TOx, TFu) is determined based on a measured first pressure (p1) in the at least one fuel tank (TOx, TFu) prior to a filling procedure with pressurizing gas, a measured first temperature (T1) in the at least one fuel tank (TOx, TFu) prior to the filling procedure, a measured first vapor pressure (pV1) of the fuel prior to the filling procedure, a measured time period (dt) of the filling procedure, a measured second pressure (p2) in the at least one fuel tank (TOx, TFu) after the filling procedure, a measured second temperature (T2) in the at least one fuel tank (TOx, TFu) after the filling procedure, a measured second vapor pressure (pV2) of the fuel after the filling procedure, a measured third pressure, averaged over the filling procedure, in the high-pressure tank (THe), a measured third temperature, averaged over the filling procedure, in the high-pressure tank (THe), a fuel tank volume (VT(p)) depending from the internal pressure, a temperature-dependent fuel density (rho(T)), an orifice coefficient (K) and a parameter (C) that takes into account the dependence of the critical flow on the supply pressure.

2. The method according to claim 1, **characterized in that** the method further comprises the step of opening at least one check/latch valve (CLV1, CLV2) for selecting at least one fuel tank (TOx, TFu) to be pressurized.

3. The method according to any one of claim 1 or 2, **characterized in that** the method further comprises the step of closing the at least one control valve (FCV1, FCV2), when a desired pressure (p1, p2) is reached in the at least one fuel tank (Tox, Tfu).

4. The method according to any one of the preceding claims, **characterized in that** the amount of fuel (mProp) is determined by means of the formulas

$$\text{mProp} := \frac{\dfrac{p1 - pV1}{T1} \cdot VT(p1) - \dfrac{(p2 - pV2)}{T2} \cdot VT(p2) + \text{delta\_mHe} \cdot R}{\dfrac{p1 - pV1}{T1 \cdot rho(T1)} - \dfrac{p2 - pV2}{T2 \cdot rho(T2)}}$$

with

$$\text{delta\_mHe} := dt \cdot K \cdot pHe^{c} \cdot \left[ \frac{1}{R \cdot THe \cdot \left[ \left( \dfrac{a}{THe} - b \right) + \dfrac{1}{pHe} \right]} \right]^{\frac{1}{2}}$$

and

$$VT(p) := V0 + aV \cdot p$$

and

$$rho(T) := rho20 \cdot [\, 1 + aProp \cdot (T - 293) \,]$$

wherein mProp is the amount of fuel;
wherein p1 is the measured first pressure Druck in the at least one fuel tank (TOx, TFu) prior to the filling procedure with pressurizing gas;
wherein pV1 is the measured first vapor pressure of the fuel prior to the filling procedure;
wherein p2 is the measured second pressure in the at least one fuel tank (TOx, TFu) after the filling procedure;
wherein pV2 is the second vapor pressure of the fuel after the filling procedure;
wherein T1 is the measured first temperature in the at least one fuel tank (TOx, TFu) prior to the filling procedure;
wherein T2 is the measured second temperature in the at least one fuel tank (TOx, TFu) after the filling procedure;
wherein VT(p) is the fuel tank volume depending from the internal pressure and p is the internal pressure, V0 is the tank volume at ambient pressure and aV is an approximation coefficient for linear modeling of the tank volume;

wherein dt is the measured time period of the filling procedure;

wherein K is the orifice coefficient;

wherein C is the parameter that takes into account the dependence of the critical flow on the supply;

wherein T is a temperature;

wherein R is the gas constant;

wherein pHe is the measured third pressure, averaged over the filling procedure, in the high-pressure tank (THe);

wherein The is the measured third temperature, averaged over the filling procedure, in the high-pressure tank (THe);

wherein a, b are empirically determined real gas coefficients;

wherein aProp is an approximation coefficient for linear modeling of the density;

wherein rho20 is the fuel density at 20°C;

wherein rho(T) is the temperature dependent fuel density.

**Revendications**

1.  Procédé de mesure de la quantité de carburant d'un engin spatial se trouvant en apesanteur, comprenant les étapes consistant à ouvrir au moins une soupape d'arrêt (FLV1, FLV2) pour sélectionner un obturateur (FL1, FL2) à utiliser et à libérer un flux d'un gaz de mise sous pression d'au moins un réservoir sous haute pression (THe) avec au moins une soupape de commande (FCV1, FCV2) vers au moins un réservoir de carburant (TOx, TFu), **caractérisé en ce que** la masse de carburant (mProp) dans ledit au moins un réservoir de carburant (TOx, TFu) est déterminée à l'aide d'une première pression (p1) mesurée dans ledit au moins un réservoir de carburant (TOx, TFu) avant l'opération de remplissage avec du gaz de mise sous pression, d'une première température (T1) mesurée dans ledit au moins un réservoir de carburant (TOx, TFu) avant l'opération de remplissage, d'une première pression de vapeur (pV1) du carburant avant l'opération de remplissage, d'une durée (dt) mesurée de l'opération de remplissage, d'une deuxième pression (p2) mesurée dans ledit au moins un réservoir de carburant (TOx, TFu) après l'opération de remplissage, d'une deuxième température (T2) mesurée dans ledit au moins un réservoir de carburant (TOx, TFu) après l'opération de remplissage, d'une deuxième pression de vapeur (pV2) du carburant après l'opération de remplissage, d'une troisième pression (pHe) mesurée dans le réservoir sous haute pression (THe), moyennée sur l'opération de remplissage, d'une troisième température (The) mesurée dans le réservoir sous haute pression (THe), moyennée sur l'opération de remplissage, d'un volume du réservoir de carburant (VT(p)) dépendant de la pression intérieure, d'une densité de carburant (rho(T)) dépendante de la température, d'un coefficient d'obturateur (K) et d'un paramètre (C) qui tient compte de la dépendance de l'écoulement critique à l'égard de la pression préalable.

2.  Procédé selon la revendication 1, **caractérisé en ce qu'**il comprend en outre l'étape consistant à ouvrir au moins une soupape antiretour/d'arrêt (CLV1, CLV2) pour sélectionner au moins un réservoir de carburant (TOx, TFu) à mettre sous pression.

3.  Procédé selon l'une des revendications 1 ou 2, **caractérisé en ce qu'**il comprend en outre l'étape consistant à fermer ladite au moins une soupape de commande (FCV1, FCV2) quand une pression (p1, p2) souhaitée est atteinte dans au moins un réservoir de carburant (Tox, Tfu).

4.  Procédé selon l'une des revendications précédentes, **caractérisé en ce que** la masse de carburant (mProp) est déterminée à l'aide des formules

$$mProp := \frac{\frac{p1 - pV1}{T1} \cdot VT(p1) - \frac{(p2 - pV2)}{T2} \cdot VT(p2) + delta\_mHe \cdot R}{\frac{p1 - pV1}{T1 \cdot rho(T1)} - \frac{p2 - pV2}{T2 \cdot rho(T2)}}$$

avec

$$delta\_mHe := dt \cdot K \cdot pHe^{\varepsilon} \cdot \left[ \frac{1}{R \cdot The \cdot \left[ \left( \frac{a}{The} - b \right) + \frac{1}{pHe} \right]} \right]^{\frac{1}{2}}$$

et

$$VT(p) := V0 + aV \cdot p$$

et

$$rho(T) := rhp20 \cdot [1 + aProp \cdot (T - 293)],$$

où mProp est la masse de carburant ;

où p1 est la première pression mesurée dans ledit au moins un réservoir de carburant (TOx, TFu) avant l'opération de remplissage ;

où pV1 est la première pression de vapeur du carburant avant l'opération de remplissage ;

où p2 est la deuxième pression mesurée dans ledit au moins un réservoir de carburant (TOx, TFu) après l'opération de remplissage ;

où pV2 est la deuxième pression de vapeur du carburant après l'opération de remplissage ;

où T1 est la première température mesurée dans ledit au moins un réservoir de carburant (TOx, TFu) avant l'opération de remplissage ;

où T2 est la deuxième température mesurée dans ledit au moins un réservoir de carburant (TOx, TFu) après l'opération de remplissage ;

où VT(p) est le volume du réservoir de carburant dépendant de la pression intérieure et p est la pression intérieure, V0 le volume du réservoir à pression ambiante et aV un coefficient d'approximation pour la modélisation linéaire du volume du réservoir ;

où dt est la durée mesurée de l'opération de remplissage ;

où K est le coefficient d'obturateur ;

où C est le paramètre qui tient compte de la dépendance de l'écoulement critique à l'égard de la pression préalable ;

où T est une température ;

où R est la constante des gaz ;

où pHe est la troisième pression mesurée, moyennée sur l'opération de remplissage, dans le réservoir sous haute pression (THe) ;

où The est la troisième température mesurée, moyennée sur l'opération de remplissage, dans le réservoir sous haute pression (THe) ;

où a, b sont des coefficients de gaz réels déterminés empiriquement ;

où aProp est un coefficient d'approximation pour la modélisation linéaire de la densité ;

où rho20 est la densité du carburant à 20 °C ;

où rho(T) est la densité du carburant dépendante de la température.

Figur 1: Blockdiagramm eines Antriebssystems

Figur 2: Tankdruck während der Mission

Figur 3: Absolute und 3-Sigma Genauigkeit

Figur 4: Einfluss der Fehler auf den Gesamtfehler

Figur 5: Blockdiagramm der erfindungsgemäßen Vorrichtung

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2004231413 A
- US 5880356 A